(19) **Europäisches Patentamt**

**European Patent Office**

**Office européen des brevets**

(11) **EP 1 398 470 B1**

(12) **EUROPÄISCHE PATENTSCHRIFT**

(45) Veröffentlichungstag und Bekanntmachung des Hinweises auf die Patenterteilung:
**01.06.2005  Patentblatt 2005/22**

(51) Int Cl.⁷: **F02B 37/04**, F02B 37/16, F02D 41/00

(21) Anmeldenummer: **03020365.7**

(22) Anmeldetag: **09.09.2003**

(54) **Verfahren zur Erkennung der Strömungsumkehr an der Verdichtungsdrosselklappe bei mehrfach aufgeladener Brennkraftmaschine**

Method for detection of reverse flow at a compression throttle valve of a multiple supercharged internal combustion engine

Procédé de détection d'écoulement inverse au niveau du papillon de compression d'un moteur à combustion interne suralimenté multiple

(84) Benannte Vertragsstaaten:
**AT BE BG CH CY CZ DE DK EE ES FI FR GB GR HU IE IT LI LU MC NL PT RO SE SI SK TR**

(30) Priorität: **10.09.2002  DE 10241886**

(43) Veröffentlichungstag der Anmeldung:
**17.03.2004  Patentblatt 2004/12**

(73) Patentinhaber: **Volkswagen AG**
**38436 Wolfsburg (DE)**

(72) Erfinder:
• **Pelz, Norbert**
**38479 Tappenbeck (DE)**
• **Schultalbers, Matthias**
**38536 Meinersen/Ahnsen (DE)**

• **Sprysch, Andreas**
**31234 Edemissen (DE)**
• **Braun, Holger, Dr.**
**38518 Gifhorn (DE)**
• **Von Der Ohe, Thomas**
**38528 Adenbüttel (DE)**

(74) Vertreter: **Kandlbinder, Markus Christian et al**
**Zeitler - Volpert - Kandlbinder**
**Patentanwälte**
**Herrnstrasse 44**
**80539 München (DE)**

(56) Entgegenhaltungen:
WO-A-97/18388          DE-A- 19 928 523
US-A- 6 141 965         US-A1- 2001 004 834
US-B1- 6 295 817

**Beschreibung**

Die Erfindung betrifft ein Verfahren zum Betreiben einer Brennkraftmaschine, insbesondere mit Kraftstoff-Direkteinspritzung, insbesondere Dieselmotor, insbesondere eines Kraftfahrzeugs, mit einem Luftpfad für Ansaugluft, wobei in dem Luftpfad für Ansaugluft ein Kompressor, ein Abgasturbolader und eine Verdichtungsdrosselklappe angeordnet sind, wobei ein Ausgang des Kompressors mit einem Eingang des Abgasturboladers verbunden ist und ein den Kompressor überbrückender sowie durch die Verdichtungsdrosselklappe wahlweise schließbarer Luftkanal (Bypass-Leitung) vorgesehen ist, gemäß dem Oberbegriff des Anspruchs 1.

Bei doppelt aufgeladenen Brennkraftmaschinen ist neben einem Abgasturbolader zusätzlich ein Kompressor im Frischluftpfad angeordnet. Eine Bypass-Leitung mit Verdichtungsdrosselklappe überbrückt wahlweise den Kompressor, da die Förderleistung des Kompressors im oberen Drehzahlbereich nicht ausreicht, um den Motor mit genügend Frischluft zu versorgen. Wird die Verdichtungsdrosselklappe geöffnet, so kann der Abgasturbolader über die Bypass-Leitung im oberen Drehzahlbereich und bei ausgeschaltetem Kompressor im unteren Teillastbereich seine Frischluft entnehmen. Die Verdichtungsdrosselklappe dient zum Regeln der Verdichtung des Kompressors. Um eine unerwünschte Rückströmung über die Verdichterdrosselklappe in solchen Situationen zu verhindern, in denen der Kompressor weniger Luft fördert als der Abgasturbolader aus dem Raum nach der Verdichterdrosselklappe absaugt, ist üblicherweise eine Rückschlagklappe in der Bypass-Leitung vorgesehen, die sich bei Unterdruck in der Bypass-Leitung automatisch öffnet. Eine solche Brennkraftmaschine ist in WO 9 718 388 A gezeigt.

Der vorliegenden Erfindung liegt die Aufgabe zugrunde, ein Verfahren der obengenannten Art zur bzgl. der Steuerung der Frischluftzufuhr bei doppelt aufgeladenen Brennkraftmaschinen zu verbessern.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß ein Frischluft-Massenstrom $\dot{m}_K$ durch den Kompressor und ein Frischluft-Massenstrom $\dot{m}_{ATL}$ durch den Abgasturbolader bestimmt wird; daß der Wert des Frischluft-Massenstromes $\dot{m}_K$ mit dem Wert des Frischluft-Massenstromes $\dot{m}_{ATL}$ verglichen wird; und daß die Verdichtungsdrosselklappe geschlossen wird, wenn der Wert des Frischluft-Massenstromes $\dot{m}_K$ gleich oder größer als der Wert des Frischluft-Massenstromes $\dot{m}_{ATL}$ ist.

Dies hat den Vorteil, daß eine Strömungsumkehr an der Verdichtungsdrosselklappe überwacht und bei erkannter Strömungsumkehr die Verdichtungsdrosselklappe aufgesteuert wird. Dadurch kann eine zusätzliche Rückschlagklappe in der Bypass-Leitung entfallen.

Um den Abgasturbolader auf der Saugseite nicht anzudrosseln wird ein Druck $p_{vATL}$ vor dem Abgasturbolader mit einem Druck $p_{vVDK}$ vor der Verdichtungsdrosselklappe verglichen und die Verdichtungsdrosselklappe komplett aufgesteuert, wenn der Druck $p_{vATL}$ gleich dem Druck $p_{vVDK}$ ist. Der Druck $p_{vVDK}$ vor der Verdichtungsdrosselklappe wird gemessen oder berechnet oder gleich einem Umgebungsdruck $p_u$ gesetzt.

In einer bevorzugten Ausführungsform wird ein Frischluft-Massenstrom $\dot{m}_{VDK}$ durch die Verdichtungsdrosselklappe berechnet und aus der Summe $\dot{m}_K - \dot{m}_{VDK} - \dot{m}_{ATL}$ von zuströmenden und abströmenden Frischluft-Massenströmen vor dem Abgasturbolader ein Druck $p_{vATL}$ vor dem Abgasturbolader berechnet. Hierbei wird der Druck $p_{vATL}$ durch Integration der Gleichung

$$\frac{dp_{vATL}}{dt} = \frac{\dot{m}_K - \dot{m}_{VDK} - \dot{m}_{ATL}}{V_{K\_ATL} / R \cdot T_L}$$

berechnet, wobei $V_{K\_ATL}$ das Volumen des Luftpfades zwischen dem Kompressor und dem Abgasturbolader, $R$ die Gaskonstante und $T_L$ die Temperatur der Luft zwischen dem Kompressor und dem Abgasturbolader ist. Der Frischluft-Massenstrom $\dot{m}_{VDK}$ wird bevorzugt aus einem Modell für die Verdichtungsdrosselklappe mit den Eingangsparametern Umgebungstemperatur $t_u$, Umgebungsdruck $p_u$ und Stellung $\alpha_{VDK}$ der Verdichtungsdrosselklappe berechnet.

Zweckmäßigerweise werden die Frischluft-Massenströme $\dot{m}_{ATL}$ und $\dot{m}_K$ berechnet. Hierzu wird der Frischluft-Massenstrom $\dot{m}_K$ aus einem Modell für den Kompressor mit den Eingangsparametern Kompressordrehzahl $n_K$ und Umgebungsdruck $p_u$ und der Frischluft-Massenstrom $\dot{m}_{ATL}$ aus einem Modell für den Abgasturbolader mit den Eingangsparametern Druck $p_{vATL}$ vor dem Abgasturbolader und Drehzahl $n_{ATL}$ des Abgasturboladers und/oder Leistung $P_{ATL}$ des Abgasturboladers berechnet. Die Drehzahl $n_{ATL}$ des Abgasturboladers wird dabei bevorzugt aus einem Turbinenmodell für den Abgasturbolader mit einem Abgas-Massenstrom $\dot{m}_{Abg}$, einer Abgastemperatur $T_{Abg}$, einem Frischluft-Massenstrom $\dot{m}_{ATL}$ durch den Abgasturbolader aus einer vorhergehenden Berechnung, einer Temperatur $T_{ATL}$ am Abgasturbolader, einem Abgas-Massenstrom $\dot{m}_{WG}$ durch ein Wastegate und einem Öffnungswert $\alpha_{WG}$ für das Wastegate als Eingangswerte berechnet. Der Abgas-Massenstrom $\dot{m}_{Abg}$ wird beispielsweise aus einer Füllungserfassung und die Abgastemperatur $T_{Abg}$ wird beispielsweise aus einem Abgastemperaturmodell bestimmt.

Um ein Leersaugen des Volumens zwischen Abgasturbolader und Kompressor zu verhindern, wird die Verdichtungsdrosselklappe nur dann zugesteuert, wenn der Wert des Frischluft-Massenstromes $\dot{m}_K$ größer als der Wert des Frischluft-Massenstromes $\dot{m}_{ATL}$ ist.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in

Fig. 1  eine schematische Darstellung des Luftpfades und einer Abgasseite einer doppelt aufgeladenen Brennkraftmaschine,

Fig. 2  eine schematische Darstellung der Modellierung von Motorkomponenten der Brennkraftmaschine gemäß Fig. 1,

Fig.3  eine schematische Darstellung der Modellierung des Luftpfades der Brennkraftmaschine gemäß Fig. 1, und

Fig. 4  eine schematische Darstellung eines Turbinenmodells.

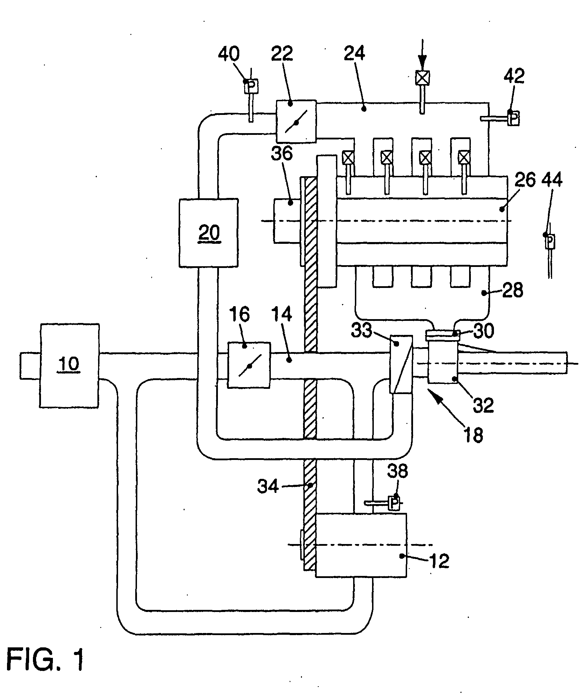

Das erfindungsgemäße Verfahren wird nachfolgend lediglich beispielhaft anhand einer doppelt aufgeladenen Brennkraftmaschine erläutert. Obwohl die Erfindung bei doppelt aufgeladenen Brennkraftmaschine besondere Vorteile bietet, ist sie nicht auf doppelt aufgeladene Brennkraftmaschinen beschränkt. Wie aus Fig. 1 ersichtlich, umfaßt die Brennkraftmaschine einen Luftpfad, in dem ein Luftfilter 10, ein Kompressor 12, ein den Kompressor 12 überbrückender Luftkanal 14, eine den Luftkanal 14 wahlweise verschließende Verdichtungsdrosselklappe 16, ein Abgasturbolader 18, ein Ladeluftkühler 20, eine Drosselklappe 22 und ein Saugrohr 24, welches in jeweilige Brennräume in einem Zylinderkurbelgehäuse 26 der Brennkraftmaschine mündet, angeordnet sind. An einem Abgaskrümmer 28 ist ein Wastegate 30 angeordnet, welches eine Turbine 32 des Abgasturboladers 18 mit einem Abgasstrom beaufschlagt. Der Abgasturbolader 18 umfaßt ferner einen Verdichter 33. Ein Ausgang des Kompressors 12 mündet in einen Eingang des Abgasturboladers 18. Der Kompressor 12 wird über einen Riemen 34 von einer Kurbelwelle der Brennkraftmaschine angetrieben. Hierbei ist der Antrieb des Kompressors 12 mittels einer Kupplung 36, beispielsweise einer Magnetkupplung, wahlweise von der Kurbelwelle trennbar. Das Konzept dieser Anordnung liegt darin, in einem niedrigen Drehzahlbereich eine Aufladung durch den Kompressor 12 zu realisieren und ab einer bestimmten Drehzahl, ab der der Abgasturbolader 18 eine ausreichende Aufladung gewährleistet, den Kompressor 12 abzuschalten. Jeweilige Sensoren 38, 40, 42 und 44 messen jeweils einen Druck $p_{vATL}$ vor dem Abgasturbolader 18, einen Druck $p_{vDK}$ vor der Drosselklappe 22, einen Druck $p_s$ im Saugrohr 24 und einen Umgebungsdruck $p_u$.

Der Saugrohrdruck $p_s$ wird modelliert, d.h. aus einem Modell zu berechnet. Hierbei liegt der Berechnung einer Druckänderung in einem Volumen folgende Überlegung zugrunde: Wenn in ein vorgegebenes Volumen $V_{ASR}$ ein Massenstrom $\dot{m}_E$ einströmt und ein Massenstrom $\dot{m}_A$ abströmt, dann ist eine Druckänderung über dieses Volumen proportional zu einer Summe aller einströmenden und ausströmenden Massenströme, wobei abströmende Massenströme negativ in die Summe eingehen. Es gilt daher

$$\frac{dp_L}{dt} \approx \dot{m}_E - \dot{m}_A.$$

Aus der Gleichung

$$\dot{m}_A = \dot{m}_E - \frac{dp_L}{dt} \cdot \frac{V_{ASR}}{R \cdot T_L}$$

folgt dann

$$\frac{dp_L}{dt} = \frac{\dot{m}_E - \dot{m}_A}{V_{ASR}/_{R \cdot T_L}}$$

Bei bekannten Massenströmen, Volumen und Temperatur berechnet sich dann der Druck durch Integration dieser Gleichung.

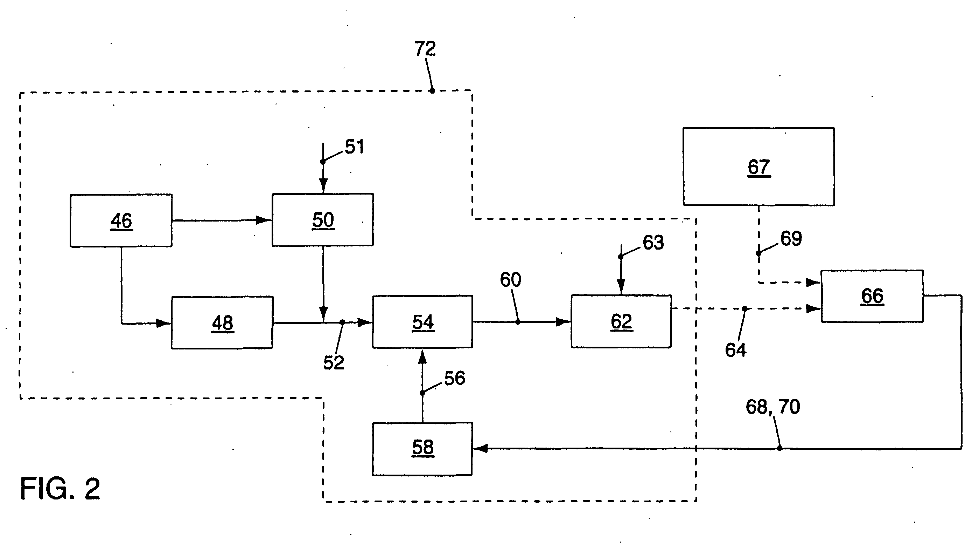

Fig. 2 zeigt eine Darstellung der modellierten Motorkomponenten. Ein Druck 46 vor dem Kompressor 12, beispielsweise der Umgebungsdruck, wird einem Modell 48 für den Kompressor 12 und einem Modell 50 für die Verdichtungsklappe 16 zugeführt. Zusätzlich erhält das Modell 50 bei 51 einen Istwinkel (Wnkelstellung) der Verdichtungsdrosselklappe 16. Diese beiden Modelle 50 und 48 werden in Echtzeit gleichzeitig berechnet und liefern einen Druck 52 vor dem Abgasturbolader 18. Der Druck 52 vor dem Abgasturbolader 18 wird einem Modell 54 für den Abgasturbolader 18 zugeführt und daraus zusammen mit einer Laderdrehzahl und/oder Laderleistung 56 aus einem Turbinenmodell 58 ein Druck 60 vor der Drosselklappe 22 berechnet. Der Druck 60 vor der Drosselklappe 22 wird einem Modell 62 für die Drosselklappe 22 zugeführt, welches zusätzlich bei 63 den Istwinkel (Winkelstellung) der Drosselklappe 22 erhält, und es wird daraus der modellierte Saugrohrdruck 64 berechnet. Dieser modellierte Saugrohrdruck 64 wird einem Saugrohrmodell 66 zugeführt, mittels welchem die Berechnung zur Füllungserfassung durchgeführt wird. Zusätzlich wird dem Saugrohrmodell 66 ein aus den gemessene Größen 67 für die Drücke vor Abgasturbolader 18 und Drosselklappe 22 sowie dem gemessenen Druck im Saugrohr 24 abgeleiteter Saugrohrdruck bei 69 zugeführt. Aus dem Saugrohrmodell 66 werden Abgas-Massenstrom 68 und Abgastemperatur 70 berechnet und dem Turbinenmodell 58 zugeführt, wodurch sich ein geschlossenes, numerisches Modell ergibt. In der Darstellung gemäß Fig. 2 bezeichnet 72 denjenigen Teil, welcher den Frischluftpfad modelliert.

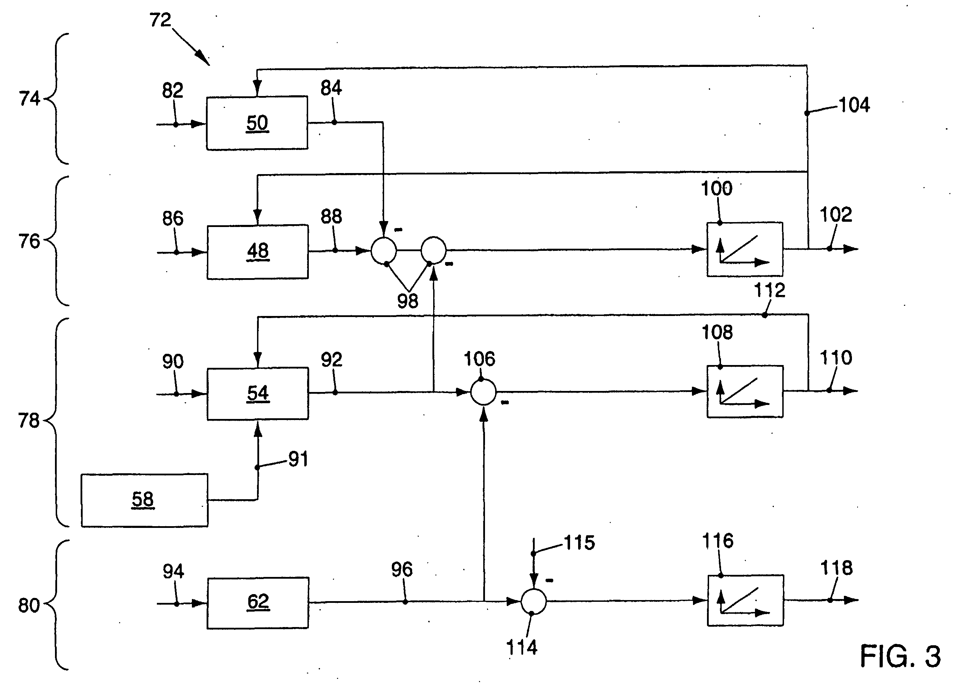

Fig. 3 veranschaulicht die Modellierung des Frischluftpfades 72 gemäß Fig. 2 im einzelnen. Der Frischluftpfad ist in vier Teilsysteme 74, 76, 78 und 80 aufgeteilt. Das erste Teilsystem 74 beschreibt den Teil des Frischluftpfades vor der Verdichtungsdrosselklappe 16. Das zweite Teilsystem 76 beschreibt den Teil des Frischluftpfades zwischen der Verdichtungsdrosselklappe 16, dem Kompressor 12 und dem Abgasturbolader 18. Das dritte Teilsystem 78 beschreibt den Teil des Frischluftpfades zwischen dem Abgasturbolader 18 und der Drosselklappe 22. Das vierte Teilsystem 80 beschreibt den Teil des Frischluftpfades zwischen der Drosselklappe 22 und den Eingängen in Brennräume der Brennkraftmaschine, d.h. den Teil des Frischluftpfades, welcher durch das Saugrohr 24 gebildet ist.

Dem Modell 50 für die Verdichtungsdrosselklappe 16 werden bei 82 als Eingangswerte die Umgebungstemperatur $T_U$, der Umgebungsdruck $p_u$ und die Stellung der Verdichtungsdrosselklappe $\alpha_{VDK}$ zugeführt. Bei 84 gibt das Modell 50 für die Verdichtungsdrosselklappe 16 einen Frischluft-Massenstrom $\dot{m}_{VDK}$ durch die Verdichtungsdrosselklappe 16 aus. Dem Modell 48 für den Kompressor 12 werden bei 86 als Eingangswerte eine Kompressordrehzahl $n_K$ und ein Umgebungsdruck $p_u$ zugeführt. Bei 88 gibt das Modell 48 für den Kompressor 12 einen Frischluft-Massenstrom $\dot{m}_K$ durch den Kompressor 12 aus. Dem Modell 54 für den Abgasturbolader 18 wird bei 90 als Eingangswert ein Druck vor dem Abgasturbolader $p_{vATL}$ zugeführt. Bei 91 wird dem Modell 54 für den Abgasturbolader 18 zusätzlich die im Turbinenmodell 58 berechnete Drehzahl $n_{ATL}$ des Abgasturboladers 18 und/oder Leistung $P_{ATL}$ des Abgasturboladers 18 zugeführt. Bei 92 gibt das Modell 54 für den Abgasturbolader 18 einen Frischluft-Massenstrom $\dot{m}_{ATL}$ durch den Abgasturbolader 18 und eine Temperatur am Abgasturbolader $T_{ATL}$ aus.

Bei 94 werden dem Modell 62 für die Drosselklappe 22 als Eingangswerte eine Temperatur $T_{vDK}$ vor der Drosselklappe 22, ein Druck $p_s$ im Saugrohr 24, der Druck $P_{vDK}$ vor der Drosselklappe 22 und eine Stellung (Winkelstellung) $\alpha_{DK}$ der Drosselklappe 22 zugeführt. Bei 96 gibt das Modell 62 für die Drosselklappe 22 einen Frischluft-Massenstrom $\dot{m}_{DK}$ durch die Drosselklappe 22 aus.

Bei 98 erfolgt die Summenbildung

$$\dot{m}_K - \dot{m}_{VDK} - \dot{m}_{ATL}$$

und diese Summe wird einem Berechnungsblock 100 zugeführt, der die folgende Gleichung Integriert,

$$\frac{dp_{vATL}}{dt} = \frac{\dot{m}_K - \dot{m}_{VDK} - \dot{m}_{ATL}}{V_{K\_ATL}/R \cdot T_L},$$

wobei $V_{K\_ATL}$ das Volumen des Luftpfades zwischen dem Kompressor und dem Abgasturbolader, $R$ die Gaskonstante und $T_L$ die Lufttemperatur zwischen dem Kompressor 12 und dem Abgasturbolader 18, d.h. im zweiten Teilsystem 76, ist. Der so berechnete Druck $p_{vATL}$ vor dem Abgasturbolader 18 wird bei 102 ausgegeben. Dieser Druck $p_{vATL}$ vor dem Abgasturbolader 18 wird über 104 sowohl an das Modell 50 für die Verdichtungsdrosselklappe 16 als auch an das Modell 48 für den Kompressor 12 zurück geführt. Außerdem dient er nach dem Anlaufen der Berechnung als Eingangswert bei 90 für das Modell 54 für den Abgasturbolader 18.

Bei 106 erfolgt die Summenbildung

$$\dot{m}_{ATL} - \dot{m}_{DK}$$

und diese Summe wird einem nachfolgenden Berechnungsblock 108 zugeführt, der die folgende Gleichung Integriert,

$$\frac{dp_{vDK}}{dt} = \frac{\dot{m}_{ATL} - \dot{m}_{DK}}{V_{ATL\_DK}/R \cdot T_L}$$

wobei $V_{ATL\_DK}$ das Volumen des Luftpfades zwischen dem Abgasturbolader und der Drosselklappe, $R$ die Gaskonstante und $T_L$ die Lufttemperatur zwischen dem Abgasturbolader 18 und der Drosselklappe 22, d.h. im dritten Teilsystem 78, ist. Der so berechneten Druck $p_{vDK}$ vor der Drosselklappe 22 wird bei 110 ausgegeben. Dieser Druck $p_{vDK}$ vor der Drosselklappe 22 wird über 112 an das Modell 54 für den Abgasturbolader 18 zurückgeführt. Außerdem dient er nach dem Anlaufen der Berechnung als Eingangswert bei 94 für das Modell 62 für die Drosselklappe 22.

Bei 114 erfolgt die Summenbildung

$$\dot{m}_{DK} - \dot{m}_{Br},$$

wobei $\dot{m}_{Br}$ ein Frischluft-Massenstrom in einen Brennraum der Brennkraftmaschine ist und bei 115 zugeführt wird. Dieser Wert $\dot{m}_{Br}$ beschreibt ein Schluckverhalten der Brennkraftmaschine und ist ein motorspezifischer und im wesentlichen konstanter Wert. Diese Summe wird einem nachfolgenden Berechnungsblock 116 zugeführt, der die folgende Gleichung Integriert,

$$\frac{dp_S}{dt} = \frac{\dot{m}_{DK} - \dot{m}_{Br}}{V_S/_{R \cdot T_L}},$$

wobei $V_S$ das Volumen des Saugrohres 24, $R$ die Gaskonstante und $T_L$ die Lufttemperatur im Saugrohr, d.h. im vierten Teilsystem 80, ist. Der so berechneten Druck $p_s$ im Saugrohr wird bei 118 ausgegeben.

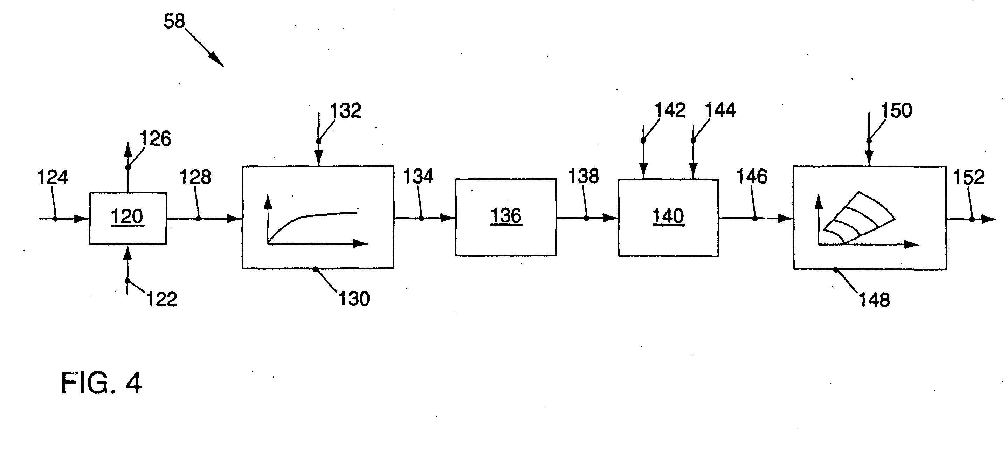

Fig. 4 veranschaulicht im Detail das Turbinenmodell 58. Dieses weist ein Modell 120 für das Wastegate 30 auf, dem als Eingangswerte bei 122 der Abgas-Massenstrom $\dot{m}_{Abg}$ und bei 124 ein Öffnungswert $\alpha_{WG}$ für das Wastegate 30 zugeführt wird. Der Öffnungswert $\alpha_{WG}$ beschreibt, welchen Anteil des Abgas-Massenstromes $\dot{m}_{Abg}$ das Wastegate 30 in die Turbine 32 leitet. Dieser Öffnungswert ist beispielsweise ein Tastverhältnis eines das Wastegate ansteuernden, elektrischen Signals. Das Tastverhältnis beschreibt, mit welchem Öffnungsquerschnitt der Ladedruck oder der Umgebungsdruck auf das Wastegateventil geleitet wird. Der Überdruck durch den Lader öffnet dann das Wastegateventil. Der Anteil des Abgasmassenstroms in die Turbine wird somit von dem Tastverhältnis und dem anliegenden Ladedruck bestimmt: $\dot{m}_{WG} = f(t_{vWG}, p_{vDK}, p_u)$, wobei $t_{vWG}$ das Tastverhältnis für das Wastegate, $p_{vDK}$ der Druck vor der Drosselklappe 22 und $p_u$ der Umgebungsdruck ist. Bei 126 gibt das Wastegatemodell 120 einen Abgas-Massenstrom $\dot{m}_{WG}$ durch das Wastegate 30 aus. Bei 128 gibt das Wastegatemodell 120 einen Abgas-Massenstrom $\dot{m}_{Turb}$ durch die Turbine 32 aus. In einem nachfolgenden Berechnungsblock 130 wird aus dem Abgas-Massenstrom $\dot{m}_{Turb}$ durch die Turbine 32 und einem bei 132 zugeführten Wert für die Abgastemperatur $T_{Abg}$ mittels eines Kennfeldes für die Turbine 32 ein Druckverhältnis $\Pi_{Turb}$ über die Turbine 32 bestimmt und bei 134 ausgegeben. In einem nachfolgenden Berechnungsblock 136 wird über eine Funktion $P_{Turb} = f(\pi)$ eine Turbinenleistung $P_{Turb}$ bestimmt und bei 138 ausgegeben. In einem nachfolgenden Berechnungsblock 140 wird über die Leistungsbilanz des Abgasturboladers 18 $P_{Turb} = P_{Verd}$, wobei $P_{Verd}$ eine Verdichterleistung ist, und den Eingangswerten Frischluft-Massenstrom $\dot{m}_{ATL}$ durch den Abgasturbolader 18 bei 142 sowie Abgastemperatur $T_{ATL}$ bei 144 ein Druckverhältnis $\Pi_{Verd}$ über den Verdichter 33 bestimmt und bei 146 ausgegeben. In einem nachfolgenden Block 148 wird aus dem Druckverhältnis $\Pi_{Verd}$ und dem bei 150 zugeführten Frischluft-Massenstrom $\dot{m}_{ATL}$ durch den Abgasturbolader 18 aus einer vorhergehenden Berechnung über ein Kennfeld für den Verdichter 33 die Drehzahl $n_{ATL}$ des Abgasturboladers 18 iterativ bestimmt und bei 152 ausgegeben.

Zum Regeln der Druckes vor dem Abgasturbolader 18 wird die Verdichtungsdrosselklappe 16 je nach Bedarf geschlossen oder geöffnet. Mit zunehmender Drehzahl saugt der Abgasturbolader 18 immer mehr Luft ab. Sobald die vom Abgasturbolader 18 abgesaugte Luftmasse der vom Kompressor 12 geförderten entspricht, herrscht Druckausgleich zwischen der Saugseite des Abgasturboladers 18 und der Druckseite bzw. dem Druck des Kompressors 12. Dieser Zustand wird erkannt und die Verdichtungsdrosselklappe 16 dann komplett aufgesteuert, um den Abgasturbolader 18 nicht anzudrosseln. Zur Erkennung des Druckausgleichs wird der Druck $p_{vATL}$ vor dem Abgasturbolader 18 und der Druck $p_{vDK}$ vor der Verdichtungsdrosselklappe 16 mittels des Modells gemäß Fig. 2 in oben angegebener Weise berechnet. Erfindungsgemäß werden diese Drücke $p_{vATL}$ und $p_{vDK}$ verglichen und zusätzlich die Frischluft-Massenströme $\dot{m}_{ATL}$ durch den Abgasturbolader 18 und $\dot{m}_K$ durch den Kompressor 12 mittels des Modells gemäß Fig. 2 in oben angegebener Weise berechnet. Ist der Frischluft-Massenstrom $\dot{m}_K$ durch den Kompressor 12 gleich oder größer dem Frischluft-Massenstrom $\dot{m}_{ATL}$ durch den Abgasturbolader 18, wird Strömungsumkehr an der Verdichtungsdrosselklappe 16 erkannt und diese geschlossen. Das Schließen der Verdichtungsdrosselklappe 16 erfolgt erst, wenn der Frischluft-Massenstrom $\dot{m}_K$ durch den Kompressor 12 größer wird als vom Abgasturbolader 18 benötigte Frischluft-Massenstrom $\dot{m}_{ATL}$. In einer besonders bevorzugten Ausführungsform wird der Druck $p_{vATL}$ vor dem Abgasturbolader gemessen.

Die Aufsteuerung der Verdichtungsdrosselklappe 16 erfolgt in Abhängigkeit von einem Vergleich des Druckes $p_{vATL}$ vor Abgasturbolader 18 mit dem Druck $p_{vDK}$ vor der Verdichtungsdrosselklappe 16. Das Schließen der Verdichtungsdrosselklappe 16 erfolgt dagegen in Abhängigkeit von einem Vergleich des Frischluft-Massenstromes $\dot{m}_{ATL}$ durch den Abgasturbolader mit dem Frischluft-Massenstrom $\dot{m}_K$ durch den Kompressor. Der Massenstromvergleich, also der größer werdende Kompressormassenstrom $\dot{m}_K$ gegenüber dem ATL-Massenstrom $\dot{m}_{ATL}$ ist für das Schließen der Verdichtungsdrosselklappe 16 ein notwendiges Kriterium. Der umgekehrte Fall, also das kleiner werden des Kompressormassenstroms $\dot{m}_K$ gegenüber dem ATL-Massenstrom $\dot{m}_{ATL}$, stellt für das Öffnen der Verdichtungsdrosselklappe 16 lediglich ein hinreichendes Kriterium dar. Wichtig ist in diesem Fall der Druckvergleich, also daß der Druck $p_{vATL}$ vor dem Abgasturbolader gleich dem Druck $P_{vVDK}$ vor der Verdichtungsdrosselklappe 16 ist.

Die zum Vergleich benötigten Drücke werden wahlweise nach den oben angegebenen Gleichungen modelliert oder alternativ gemessen. Die bevorzugte Ausführungsform ist das Messen des Druckes $p_{vATL}$ vor dem Abgasturbolader 18 und das Berechnen des Druckes $p_{vVDK}$ vor der Verdichtungsdrosselklappe 16 aus dem Umgebungsdruck. Die Modellierung des Druckes $p_{vATL}$ vor dem Abgasturbolader 18 erfolgt beispielsweise bei Entfall des Sensors 38 vor dem Abgasturbolader 18.

**Patentansprüche**

1. Verfahren zum Betreiben einer Brennkraftmaschine, insbesondere mit Kraftstoff-Direkteinspritzung, insbesondere Dieselmotor, insbesondere eines Kraftfahrzeugs, mit einem Luftpfad für Ansaugluft, wobei in dem Luftpfad für Ansaugluft ein Kompressor, ein Abgasturbolader und eine Verdichtungsdrosselklappe angeordnet sind, wobei ein Ausgang des Kompressors mit einem Eingang des Abgasturboladers verbunden ist und ein den Kompressor überbrückender sowie durch die Verdichtungsdrosselklappe wahlweise schließbarer Luftkanal (Bypass-Leitung) vorgesehen ist, **dadurch gekennzeichnet, daß** ein Frischluft-Massenstrom $\dot{m}_K$ durch den Kompressor und ein Frischluft-Massenstrom $\dot{m}_{ATL}$ durch den Abgasturbolader bestimmt wird; daß der Wert des Frischluft-Massenstromes $\dot{m}_K$ mit dem Wert des Frischluft-Massenstromes $\dot{m}_{ATL}$ verglichen wird; und daß die Verdichtungsdrosselklappe geschlossen wird, wenn der Wert des Frischluft-Massenstromes $\dot{m}_K$ gleich oder größer als der Wert des Frischluft-Massenstromes $\dot{m}_{ATL}$ ist.

2. Verfahren nach Anspruch 1, **dadurch gekennzeichnet, daß** die Frischluft-Massenströme $\dot{m}_{ATL}$ und $\dot{m}_K$ berechnet werden.

3. Verfahren nach Anspruch 1 oder 2, **dadurch gekennzeichnet, daß** ein Druck $p_{vATL}$ vor dem Abgasturbolader mit einem Druck $p_{vVDK}$ vor der Verdichtungsdrosselklappe verglichen wird und die Verdichtungsdrosselklappe komplett aufgesteuert wird, wenn der Druck $p_{vATL}$ gleich dem Druck $p_{vVDK}$ ist.

4. Verfahren nach Anspruch 3, **dadurch gekennzeichnet, daß** der Druck $p_{vVDK}$ vor der Verdichtungsdrosselklappe gemessen oder berechnet wird.

5. Verfahren nach Anspruch 3, **dadurch gekennzeichnet, daß** der Druck $p_{vVDK}$ vor der Verdichtungsdrosselklappe gleich einem Umgebungsdruck $p_u$ gesetzt wird.

6. Verfahren nach einem der Ansprüche 3 bis 5, **dadurch gekennzeichnet, daß** ein Frischluft-Massenstrom $\dot{m}_{VDK}$ durch die Verdichtungsdrosselklappe berechnet wird und daß aus der Summe $\dot{m}_K$ - $\dot{m}_{VDK}$ - $\dot{m}_{ATL}$ von zuströmenden und abströmenden Frischluft-Massenströmen vor dem Abgasturbolader ein Druck $p_{vATL}$ vor dem Abgasturbolader berechnet wird.

7. Verfahren nach Anspruch 6, **dadurch gekennzeichnet, daß** der Druck $p_{vATL}$ durch Integration der

Gleichung

$$\frac{dp_{vATL}}{dt} = \frac{\dot{m}_K - \dot{m}_{VDK} - \dot{m}_{ATL}}{V_{K\_ATL}\Big/R \cdot T_L}$$

berechnet wird, wobei $V_{K\_ATL}$ das Volumen des Luftpfades zwischen dem Kompressor und dem Abgasturbolader, $R$ die Gaskonstante und $T_L$ die Temperatur der Luft zwischen dem Kompressor und dem Abgasturbolader ist.

8. Verfahren nach Anspruch 6 oder 7, **dadurch gekennzeichnet, daß** der Frischluft-Massenstrom $\dot{m}_{VDK}$ aus einem Modell für die Verdichtungsdrosselklappe mit den Eingangsparametern Umgebungstemperatur $t_u$, Umgebungsdruck $p_u$ und Stellung $\alpha_{VDK}$ der Verdichtungsdrosselklappe berechnet wird.

9. Verfahren nach einem der vorhergehenden Ansprüche, **dadurch gekennzeichnet, daß** der Frischluft-Massenstrom $\dot{m}_K$ aus einem Modell für den Kompressor mit den Eingangsparametern Kompressordrehzahl $n_K$ und Umgebungsdruck $p_u$ berechnet wird.

10. Verfahren nach einem der vorhergehenden Ansprüche, **dadurch gekennzeichnet, daß** der Frischluft-Massenstrom $\dot{m}_{ATL}$ aus einem Modell für den Abgasturbolader mit den Eingangsparametem Druck $p_{vATL}$ vor dem Abgasturbolader und Drehzahl $n_{ATL}$ des Abgasturboladers und/oder Leistung $P_{ATL}$ des Abgasturboladers berechnet wird.

11. Verfahren nach Anspruch 10, **dadurch gekennzeichnet, daß** die Drehzahl $n_{ATL}$ des Abgasturboladers aus einem Turbinenmodell für den Abgasturbolader iterativ mit einem Abgas-Massenstrom $\dot{m}_{Abg}$, einer Abgastemperatur $T_{Abg}$, einem Frischluft-Massenstrom $\dot{m}_{ATL}$ durch den Abgasturbolader aus einer vorhergehenden Berechnung, einer Temperatur $T_{ATL}$ am Abgasturbolader, einem Abgas-Massenstrom $\dot{m}_{WG}$ durch ein Wastegate und einem Öffnungswert $\alpha_{WG}$ für das Wastegate als Eingangswerte berechnet wird.

12. Verfahren nach Anspruch 11, **dadurch gekennzeichnet, daß** der Abgas-Massenstrom $\dot{m}_{Abg}$ aus einer Füllungserfassung und die Abgastemperatur $T_{Abg}$ aus einem Abgastemperaturmodell bestimmt wird.

13. Verfahren nach Anspruch 3, **dadurch gekennzeichnet, daß** der Druck $p_{vATL}$ vor dem Abgasturbolader gemessen wird.

**14.** Verfahren nach wenigstens einem der vorhergehenden Ansprüche, **dadurch gekennzeichnet, daß** die Verdichtungsdrosselklappe nur dann zugesteuert wird, wenn der Wert des Frischluft-Massenstromes $\dot{m}_K$ größer als der Wert des Frischluft-Massenstromes $\dot{m}_{ATL}$ ist.

**Claims**

**1.** Method for operating an internal combustion engine, in particular with direct fuel injection, in particular a diesel engine, in particular of a motor vehicle, with an air path for intake air, a compressor, an exhaust-gas turbocharger and a compression throttle valve being arranged in the air path for intake air, an outlet of the compressor being connected to an inlet of the exhaust-gas turbocharger, and an air duct (bypass line) bridging the compressor and selectively closable by means of the compression throttle valve being provided, **characterized in that** a fresh-air mass flow $\dot{m}_K$ through the compressor and a fresh-air mass flow $\dot{m}_{ATL}$ through the exhaust-gas turbocharger are determined, **in that** the value of the fresh-air mass flow $\dot{m}_K$ is compared with the value of the fresh-air mass flow $\dot{m}_{ATL}$, and **in that** the compression throttle valve is closed when the value of the fresh-air mass flow $\dot{m}_K$ is equal to or higher than the value of the fresh-air mass flow $\dot{m}_{ATL}$.

**2.** Method according to Claim 1, **characterized in that** the fresh-air mass flows $\dot{m}_{ATL}$ and $\dot{m}_K$ are calculated.

**3.** Method according to Claim 1 or 2, **characterized in that** a pressure $p_{vATL}$ upstream of the exhaust-gas turbocharger is compared with a pressure $p_{vVDK}$ upstream of a compression throttle valve, and the compression throttle valve is opened fully when the pressure $p_{vATL}$ is equal to the pressure $p_{vVDK}$.

**4.** Method according to Claim 3, **characterized in that** the pressure $p_{vVDK}$ upstream of the compression throttle valve is measured or calculated.

**5.** Method according to Claim 3, **characterized in that** the pressure $p_{vVDK}$ upstream of the compression throttle valve is set equal to an ambient pressure $p_u$.

**6.** Method according to one of Claims 3 to 5, **characterized in that** a fresh-air mass flow $\dot{m}_{VDK}$ through the compression throttle valve is calculated, and **in that** a pressure $p_{vATL}$ upstream of the exhaust-gas turbocharger is calculated from the sum $\dot{m}_K - \dot{m}_{VDK} - \dot{m}_{ATL}$ of inflowing and outflowing fresh-air mass flows upstream of the exhaust-gas turbocharger.

**7.** Method according to Claim 6, **characterized in that** the pressure $p_{vATL}$ is calculated by the integration of the equation

$$\frac{dp_{vATL}}{dt} = \frac{\dot{m}_K - \dot{m}_{VDK} - \dot{m}_{ATL}}{V_{K\_ATL}/R - T_L},$$

$V_{K\_ATL}$ being the volume of the air path between the compressor and the exhaust-gas turbocharger, $R$ being the gas constant and $T_L$ being the temperature of the air between the compressor and the exhaust-gas turbocharger.

**8.** Method according to Claim 6 or 7, **characterized in that** the fresh-air mass flow $\dot{m}_{VDK}$ is calculated from a model for the compression throttle valve with the ambient temperature $t_u$, the ambient pressure $p_u$ and the position $\alpha_{VDK}$ of the compression throttle valve as input parameters.

**9.** Method according to one of the preceding claims, **characterized in that** the fresh-air mass flow $\dot{m}_K$ is calculated from a model for the compressor with the compressor rotational speed $n_K$ and the ambient pressure $p_u$ as input parameters.

**10.** Method according to one of the preceding claims, **characterized in that** the fresh-air mass flow $\dot{m}_{ATL}$ is calculated from a model for the exhaust-gas turbocharger with the pressure $p_{vATL}$ upstream of the exhaust-gas turbocharger and the rotational speed $n_{ATL}$ of the exhaust-gas turbocharger and/or the power $P_{ATL}$ of the exhaust-gas turbocharger as input parameters.

**11.** Method according to Claim 10, **characterized in that** the rotational speed $n_{ATL}$ of the exhaust-gas turbocharger is calculated from a turbine model for the exhaust-gas turbocharger iteratively with an exhaust-gas mass flow $\dot{m}_{Abg}$, with an exhaust-gas temperature $T_{Abg}$, with a fresh-air mass flow $\dot{m}_{ATL}$ through the exhaust-gas turbocharger from a preceding calculation, with a temperature $T_{ATL}$ at the exhaust-gas turbocharger, with an exhaust-gas mass flow $\dot{m}_{WG}$ through a waste gate and with an opening value $\alpha_{WG}$ for the waste gate as input values.

**12.** Method according to Claim 11, **characterized in that** the exhaust-gas mass flow $\dot{m}_{Abg}$ is determined from a filling detection and the exhaust-gas temperature $T_{Abg}$ is determined from an exhaust-gas temperature model.

**13.** Method according to Claim 3, **characterized in that** the pressure $P_{vATL}$ upstream of the exhaust-gas turbocharger is measured.

14. Method according to at least one of the preceding claims, **characterized in that** the compression throttle valve is closed only when the value of the fresh-air mass flow $\dot{m}_K$ is higher than the value of the fresh-air mass flow $\dot{m}_{ATL}$.

**Revendications**

1. Procédé pour le fonctionnement d'un moteur à combustion interne, notamment avec injection directe de carburant, notamment d'un moteur diesel, notamment d'un véhicule automobile, comprenant un passage d'air pour l'air d'admission, dans lequel, dans le passage d'air pour l'air d'admission, sont disposés un compresseur, une turbosoufflante à gaz d'échappement et un papillon de compression, une sortie du compresseur étant raccordée à une entrée de la turbosoufflante à gaz d'échappement et un conduit d'air (conduite de dérivation) court-circuitant le compresseur et pouvant être fermé de manière sélective par le papillon de compression étant prévu, **caractérisé en ce que** l'on détermine un courant volumique d'air frais $\dot{m}_k$ à travers le compresseur et un courant volumique d'air frais $\dot{m}_{ATL}$ à travers la turbosoufflante à gaz d'échappement ; **en ce que** la valeur du courant volumique d'air frais $\dot{m}_k$ est comparée à la valeur du courant volumique d'air frais $\dot{m}_{ATL}$ ; et **en ce que** le papillon de compression est fermé lorsque la valeur du courant volumique d'air frais $\dot{m}_k$ est supérieure ou égale à la valeur du courant volumique d'air frais $\dot{m}_{ATL}$.

2. Procédé selon la revendication 1, **caractérisé en ce que** les courants volumiques d'air frais $\dot{m}_{ATL}$ et $\dot{m}_k$ sont calculés.

3. Procédé selon la revendication 1 ou 2, **caractérisé en ce que** l'on compare une pression $P_{vATL}$ avant la turbosoufflante à gaz d'échappement avec une pression $p_{vVDK}$ avant le papillon de compression et le papillon de compression est commandé à l'ouverture complète lorsque la pression $p_{vATL}$ est égale à la pression $p_{vVDK}$.

4. Procédé selon la revendication 3, **caractérisé en ce que** la pression $p_{vVDK}$ avant le papillon de compression est mesurée ou calculée.

5. Procédé selon la revendication 3, **caractérisé en ce que** la pression $p_{vVDK}$ avant le papillon de compression est fixée égale à une pression de l'environnement $p_u$.

6. Procédé selon l'une quelconque des revendications 3 à 5, **caractérisé en ce qu'**un courant volumique d'air frais $\dot{m}_{VDK}$ à travers le papillon de compression est calculé et **en ce que** l'on calcule à partir de la somme $\dot{m}_k - \dot{m}_{VDK} - \dot{m}_{ATL}$ des courants volumiques d'air frais entrant et sortant avant la turbosoufflante à gaz d'échappement, une pression $p_{vATL}$ avant la turbosoufflante à gaz d'échappement.

7. Procédé selon la revendication 6, **caractérisé en ce que** la pression $p_{vATL}$ est calculée par l'intégration de l'équation suivante :

$$\frac{dp_{vATL}}{dt} = \frac{\dot{m}_k - \dot{m}_{VDK} - \dot{m}_{ATL}}{V_{K\_ATL} \Big/ R - T_L}$$

où $V_{K\_ATL}$ est le volume du passage d'air entre le compresseur et la turbosoufflante à gaz d'échappement, R est la constante des gaz et $T_L$ est la température de l'air entre le compresseur et la turbosoufflante à gaz d'échappement.

8. Procédé selon la revendication 6 ou 7, **caractérisé en ce que** le courant volumique d'air frais $\dot{m}_{VDK}$ est calculé à partir d'un modèle pour le papillon de compression avec les paramètres d'entrée température de l'environnement $t_u$, la pression de l'environnement $p_u$, et la position $\alpha_{VDK}$ du papillon de compression.

9. Procédé selon l'une quelconque des revendications précédentes, **caractérisé en ce que** le courant volumique d'air frais $\dot{m}_k$ est calculé à partir d'un modèle pour le compresseur avec les paramètres d'entrée vitesse de rotation du compresseur $n_K$ et pression de l'environnement $p_u$.

10. Procédé selon l'une quelconque des revendications précédentes, **caractérisé en ce que** le courant volumique d'air frais $\dot{m}_{ATL}$ est calculé à partir d'un modèle pour la turbosoufflante à gaz d'échappement avec les paramètres d'entrée pression $p_{vATL}$ avant la turbosoufflante à gaz d'échappement et vitesse de rotation $n_{ATL}$ de la turbosoufflante à gaz d'échappement et/ou puissance $P_{ATL}$ de la turbosoufflante.

11. Procédé selon la revendication 10, **caractérisé en ce que** la vitesse de rotation $n_{ATL}$ de la turbosoufflante à gaz d'échappement est calculée à partir d'un modèle de turbine pour la turbosoufflante à gaz d'échappement de manière itérative avec un courant volumique de gaz d'échappement $\dot{m}_{Abg}$, une température de gaz d'échappement $T_{Abg}$, un courant volumique d'air frais $\dot{m}_{ATL}$ à travers la turbosoufflante à gaz d'échappement à partir d'un calcul précédent, d'une température $T_{ATL}$ au niveau de la turbosoufflante à gaz d'échappement, d'un courant volumique de gaz d'échappement $\dot{m}_{WG}$ à travers une grille d'échappement et d'une valeur d'ouverture $\alpha_{WG}$ pour la grille d'échappement servant de valeur d'entrée.

12. Procédé selon la revendication 11, **caractérisé en ce que** le courant volumique de gaz d'échappement $\dot{m}_{Abg}$ est déterminé à partir d'une détection du remplissage et la température de gaz d'échappement $T_{Abg}$ est déterminée à partir d'un modèle de température de gaz d'échappement.

13. Procédé selon la revendication 3, **caractérisé en ce que** la pression $p_{vATL}$ avant la turbosoufflante à gaz d'échappement est mesurée.

14. Procédé selon au moins l'une quelconque des revendications précédentes, **caractérisé en ce que** le papillon de compression n'est commandé à la fermeture que lorsque la valeur du courant volumique d'air frais $\dot{m}_k$ est supérieure à la valeur du courant volumique d'air frais $\dot{m}_{ATL}$.

FIG. 1

FIG. 2

EP 1 398 470 B1

11

FIG. 3

EP 1 398 470 B1

EP 1 398 470 B1

FIG. 4